**Europäisches Patentamt**

**European Patent Office**

**Office européen des brevets**

(19)

(11) Veröffentlichungsnummer: **0 232 732**
**B1**

(12) **EUROPÄISCHE PATENTSCHRIFT**

(45) Veröffentlichungstag der Patentschrift:
**31.05.89**

(51) Int. Cl.⁴: **B60S 1/36**

(21) Anmeldenummer: **87100364.6**

(22) Anmeldetag: **14.01.87**

(54) Vorrichtung, insbesondere Hubwischeranlage für Kraftfahrzeuge.

(30) Priorität: **15.01.86 DE 3600936**

(43) Veröffentlichungstag der Anmeldung:
**19.08.87 Patentblatt 87/34**

(45) Bekanntmachung des Hinweises auf die Patenterteilung:
**31.05.89 Patentblatt 89/22**

(84) Benannte Vertragsstaaten:
**FR GB IT**

(56) Entgegenhaltungen:
**DE-A- 3 409 256**

**Die Akte enthält technische Angaben, die nach dem Eingang der Anmeldung eingereicht wurden und die nicht in dieser Patentschrift enthalten sind.**

(73) Patentinhaber: **SWF Auto-Electric GmbH, Stuttgarter Strasse 119 Postfach 135, D-7120 Bietigheim-Bissingen(DE)**

(72) Erfinder: **Egner-Walter, Bruno, Käferflugstrasse 43, D-7100 Heilbronn(DE)**
Erfinder: **Schmid, Eckhardt, Heilbronner Strasse 62, D-7129 Brackenheim(DE)**
Erfinder: **Scholl, Wolfgang, Gartenstrasse 16, D-7121 Gemmrigheim(DE)**

**Beschreibung**

Die Erfindung bezieht sich auf eine Vorrichtung, insbesondere eine Hubwischeranlage für Kraftfahrzeuge, gemäß den Merkmalen des Oberbegriffs des Anspruchs 1.

Bei vielen Anwendungsfällen einer solchen Vorrichtung muß der Kolben so geführt werden, daß er sich während seiner Verstellbewegung nicht um seine Längsachse drehen kann. Dies gilt auch für sogenannte Hubwischeranlagen, bei denen während der Pendelbewegung der an dem Kolben fixierte Scheibenwischer in radialer Richtung ein- und ausgefahren wird, so daß auch die Eckbereiche einer Windschutzscheibe von dem Wischblatt des Scheibenwischers erreicht werden.

Aus der DE-A- 3 409 256 ist eine Hubwischeranlage bekannt, bei der am Kolben verdrehfest ein Schlitten fixiert ist, der in seinen diametral gegenüberliegenden Endbereichen Führungsnuten aufweist, in die gehäusefeste Führungselemente in Form von flachen Schienen eingreifen. Die Tiefe dieser Nuten im Führungsschlitten ist größer als der passend in diese Nuten hineinragende Abschnitt der Führungsschienen. Wenn die Führungsschienen in der durch sie definierten Ebene nicht exakt parallel zueinander und parallel zur Verstellrichtung des Kolbens ausgerichtet sind, hat dies keinen Einfluß auf die Leichtgängigkeit des Kolbens, weil die Führungsschienen mehr oder weniger in die Nuten am Führungschlitten eintauchen können. Bei einer starren Verbindung zwischen Schlitten und Kolben wäre bei einer windschiefen Anordnung der Führungsschienen aber eine Schwergängigkeit nicht ausgeschlossen. Um diesen Nachteil zu vermeiden, ist daher bei dieser bekannten Ausführung der Schlitten in einer Richtung beweglich am Kolben gehalten, so daß diese schädlichen Toleranzen in der Lage der Führungsschienen aufgefangen werden können. Dazu ist der Kolben an seinem Ende als Zweiflach ausgebildet, der in einer etwas größeren Aussparung im Schlitten steckt. Bei dieser Ausführung sind also Form- und Lagefehler der Führungselemente und des Schlittens, die in der Praxis unvermeidbar sind, ausgeglichen, so daß der Kolben leichtgängig verstellt werden kann. Dies wirkt sich auch günstig auf die Lebensdauer einer solchen Vorrichtung aus.

Allerdings bereitet die Herstellung eines derart ausgebildeten Verdrehschutzes für den Kolben erhebliche Schwierigkeiten und Kosten. Die Führungselemente müssen nämlich in besonderer Weise bearbeitet werden, damit sie die notwendige glatte Oberfläche aufweisen. Dies ist bei flachen Führungselementen in Form von Schienen kostspielig. Auch die Herstellung der spielbehafteten Verbindung zwischen Kolben und Schlitten ist wegen des als Zweiflach ausgebildeten Endes des Kolbens mit erheblichen Kosten verbunden. Der Schlitten hat eine verhältnismäßig komplizierte Raumform und verursacht daher auch nicht unerhebliche Kosten bei der Herstellung. Außerdem sind zusätzliche Elemente zur Fixierung des Schlittens in Verstellrichtung des Kolbens notwendig.

Der vorliegenden Erfindung liegt also die Aufgabe zugrunde, eine Vorrichtung der eingangs erwähnten Art hinsichtlich des Verdrehschutzes für den Kolben zu vereinfachen und hinsichtlich der Führungseigenschaften zu verbessern. Natürlich dürfen dabei die Laufeigenschaften und die Lebensdauer auch bei Form- und Lagefehlern der Führungselemente und des Schlittens gegenüber der bekannten Ausführung nicht verschlechtert werden.

Diese Aufgabe wird erfindungsgemäß mit den kennzeichnenden Merkmalen des Anspruchs 1 gelöst.

Die vorliegende Erfindung beruht dabei wesentlich auf der Erkenntnis, daß man den notwendigen Spielausgleich in unterschiedlichen Richtungen funktionsmäßig zusammenfassen kann, wenn man einen kugelkalottenartigen Lagerkörper vorsieht, der mit Spiel in radialer Richtung in einer kugelschalenartigen Aufnahme am Schlitten beweglich gelagert ist. Eine solche Konstruktion bringt erhebliche Kostenvorteile. Der Schlitten kann nämlich jetzt formstabil am Kolben fixiert werden und es sind in diesem Bereich keine Führungsflächen notwendig. Insbesondere ist es also möglich, den Schlitten direkt auf ein gerändeltes Ende des Kolbens aufzupreßen, so daß die teuere Herstellung eines Zweiflachs entfallen kann. Die Herstellung einer kugelschalenartigen Aufnahme am Schlitten ist kostengünstig, weil es sich um ein Herstellungsverfahren handelt, das im Getriebebau, insbesondere auch bei Scheibenwischeranlagen seit Jahren serienmäßig verwendet wird. Als Lagerkörper können ebenfalls serienmäßige Teile verwendet werden, die daher kostengünstig beschafft werden können. Insgesamt wird also gegenüber der bekannten Ausführung die Herstellung dieses Verdrehschutzes wesentlich vereinfacht und verbilligt.

Aber auch die Führungs- und Lagereigenschaften werden verbessert, denn der Lagerkörper umschließt nun zylindrisch das Führungselement, so daß gegenüber der bekannten Ausführung die Flächenpressung verringert und damit der Verschleiß reduziert wird. Es ist also eine großflächige Führung gerade zwischen den Teilen gegeben, die während der verhältnismäßig großen Hubbewegung des Kolbens aneinander entlanggleiten. Ein übermäßiger Verschleiß zwischen dem Lagerkörper und der kugelschalenartigen Aufnahme am Schlitten ist dagegen nicht zu befürchten, weil hier nur vergleichsweise kleine Relativverschiebungen bei Form- und Lagefehlern der Führungselemente bzw. des Schlittens auftreten.

Als Führungselement wird nun gemäß einer vorteilhaften Weiterbildung der Erfindung eine Stange mit einem kreisrunden Querschnitt verwendet, weil eine solche Stange auf fertigungstechnisch einfache Weise geschliffen werden kann, so daß keine übermäßigen Reibungsverluste zwischen diesem Führungselement und dem Lagerkörper auftreten.

Die Kugelschale am Schlitten wird man vorzugsweise aus einem elastischen Werkstoff ausbilden, in die der Lagerkörper eingerastet wird. Der Lagerkörper ist also in dieser Kugelschale bezüglich der bei einer Verdrehung des Kolbens auftretenden Belastung spielfrei galagert.

Natürlich könnte man die kugelschalenartige Aufnahme wie die im Getriebegestängebau üblichen Gelenkpfannen geschlossen ausführen, doch könnte dies zu Montageproblemen führen. Bevorzugt wird daher eine Ausführung, bei der diese kugelschalenartige Aufnahme am Schlitten in radialer Richtung eine maulartige Öffnung zur Einführung des Lagerkörpers aufweist. Dies ermöglicht also ein seitliches Einführen des bereits auf der Führungsstange gelagerten Lagerkörpers in die kugelschalenartige Aufnahme. Der Schlitten selbst besteht aus einem verdrehsicher auf den Kolben aufgepreßten metallischen Hebel, an den die Kugelschale aus Kunststoff angespritzt ist. Denkbar wäre aber auch eine Ausführung, bei der der Schlitten einstückig mit der Kugelschale aus Kunststoff direkt an den Kolben angespritzt wird, wodurch die Herstellungskosten weiter gesenkt werden können.

Die Erfindung und deren vorteilhafte Ausgestaltungen werden nachstehend anhand der in der Zeichnung dargestellten Ausführungsbeispiele näher erläutert. Es zeigen:

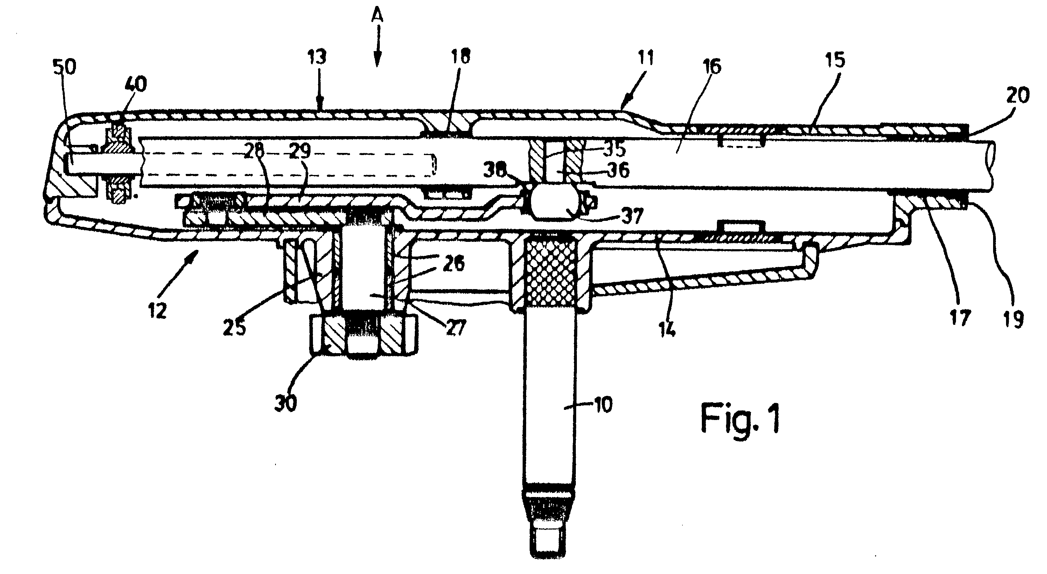

Fig. 1 einen Längsschnitt durch ein über eine Wischerwelle pendelnd antreibbares Gehäuse einer Hubwischeranlage mit einem im Gehäuse gelagerten längsverschiebbaren Kolben, an dem ein Schlitten fixiert ist,

Fig. 2 eine Teilansicht in Pfeilrichtung A auf die Vorrichtung,

Fig. 3 einen Schnitt entlang der Schnittlinie III-III und

Fig. 4 einen Schnitt entlang der Schnittlinie IV-IV in Fig. 2.

Bei der gezeigten Wischeranlage ist auf einer Wischerwelle 10 ein Gehäuse 11 verdrehsicher befestigt, das Teil eines Wischarms ist und sich aus zwei Bauteilen, nämlich einer Grundplatte 12 und einem Oberteil 13 zusammensetzt. An der Wischerwelle 10 befestigt ist die Grundplatte 12. Das Gehäuse 11 hat eine flache Form mit einem Boden 14 an der Grundplatte 12 und einer Decke 15 am Oberteil 13. Innerhalb des Gehäuses 11 ist ein zylindrischer Kolben 16 in zwei Lagern 17 und 18 so gelagert, daß er in einer zur Drehachse der Wischerwelle 10 radialen Richtung verschoben werden kann. Die Sitze für die Lager 17 und 18 befinden sich im Oberteil 13 des Gehäuses 11. Der Kolben 16 ragt aus dem Gehäuse 11 an der Vorderseite 19 heraus. Das vordere Lager 17 schließt sich unmittelbar innen an die Vorderseite 19 des Gehäuses 11 an. Vor ihm befindet sich lediglich eine Dichtung 20, die verhindern soll, daß zwischen dem Gehäuse 11 und dem Kolben 16 Schmutz in das Innere des Gehäuses eindringt. Das hintere Lager 18 befindet sich in einem Abstand vom Lager 17, der etwas größer ist als der für den Kolben vorgesehene Hub.

Von der Vorderseite 19 des Gehäuses 11 aus betrachtet hinter der Wischerwelle 10 und unterhalb des Kolbens 16 weist die Grundplatte 12 eine Hülse 25 auf, die sich im wesentlichen vom Innern des Gehäuses 11 weg nach außen erstreckt. In die Hülse 25 sind mit Paßsitz zwei Lagerbuchsen 26 eingesetzt, die eine Welle 27 aufnehmen. Diese ragt auf der einen Seite in das Innere des Gehäuses 11 hinein und steht auf der anderen Seite über die Hülse 25 der Grundplatte 12 vor. Von den gerändelten, vorstehenden Teilen trägt der eine innerhalb des Gehäuses 11 verdrehsicher eine Kurbel 28, an deren freies Ende drehbar eine Koppelstange 29 angelenkt ist. Auf dem anderen gerändelten Abschnitt der Welle 27 ist verdrehsicher ein Zahnrad 30 befestigt. Während des Betriebes der Wischeranlage wird dieses Zahnrad 30 angetrieben.

Zwischen den beiden Lagern 17 und 18 besitzt der Kolben 16 einer Bohrung 35, in die ein Kugelbolzen 36 eingepreßt ist. Die Bohrung 35 und damit auch der Kugelbolzen 36 verlaufen im wesentlichen senkrecht zum Boden 14 der Grundplatte 12 und zur Decke 15 des Oberteils 13. Auf der dem Boden 14 zugeordneten Seite des Kolbens 16 steht der Kugelbolzen 36 mit dem Kugelsegment 37 über den Kolben 16 vor. In das eine Ende der zwischen der Kurbel 28 und dem Kolben 16 liegenden Koppelstange 29 ist ein Kugelschalensegment 38 aus Kunststoff eingeknöpft, in das das Kugelsegment 37 des Kugelbolzens 36 eingedrückt ist. Während des Betriebs wird also die Drehbewegung des Zahnrads 30 über den Kurbeltrieb 28,29 in eine hin- und hergehende Bewegung des Kolbens 16 umgewandelt.

Nach der Montage am Kraftfahrzeug sind an dem Kolben 16 weitere Teile eines Wischarms befestigt, die ein Wischblatt tragen. Da dieses während des Betriebs der Anlage seiner Bewegung über die Scheibe eines Kraftfahrzeuges hinweg einen Widerstand entgegensetzt, wirkt dann auf den Kolben 16 ein Moment, das den Kolben um eine Achse in seiner Längsrichtung verdrehen will. Auch der seitliche Angriff der Koppelstange 29 am Kolben 16 erzeugt auf diesen wirkende Torsionskräfte. Um das auf den Kolben 16 wirkende Drehmoment aufzufangen, ist am hinteren Ende des Kolbens 16 verdrehsicher mit diesem ein Schlitten 40 gehalten, der vom Kolben radial absteht und an einem gehäusefesten Führungselement 50 längsgeführt ist.

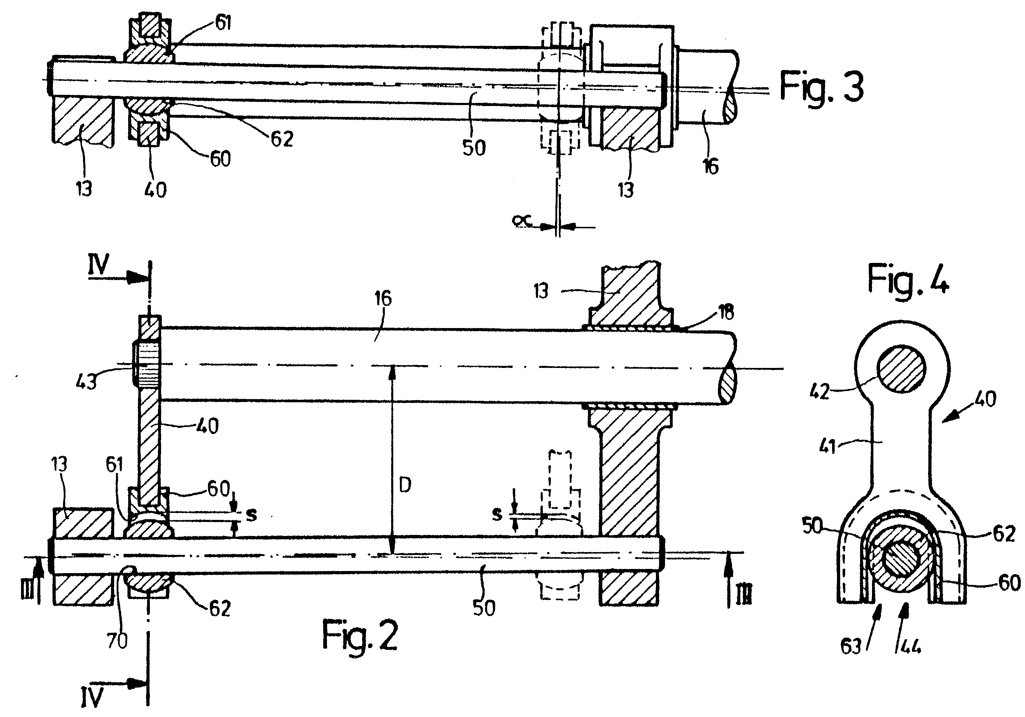

Im folgenden wird anhand der Figuren 2, 3 und 4 der konkrete Aufbau des Verdrehschutzes für den Kolben 16 beschrieben. Der Schlitten 40 besteht aus einem Metallblech 41 mit einer Bohrung 42, in die der gerändelte Endabschnitt 43 des Kolbens 16 eingepreßt ist. Damit ist also ohne jedes zusätzliche Teil eine formstabile Verbindung zwischen dem Schlitten 40 und dem Kolben 16 hergestellt. Der Schlitten 40 erstreckt sich im wesentlichen senkrecht oder radial zum Kolben 16, wie Fig. 2 zeigt. An seinem Endbereich hat dieser Schlitten 40 eine U-förmige, randoffene Aussparung 44, in die auf an sich bekannte Weise eine Kugelschale 60 aus Kunststoff eingespritzt ist. In der Aufnahme 61 dieser Kugelschale 60 sitzt passend ein kugelkalottenartiger Lagerkörper 62. Man erkennt aus Fig. 3 daß dieser Lagerkörper bezüglich der Belastungsrichtung, die bei einer Verdrehung des Hubkolbens 16 um seine Längsachse auftreten würde, spielfrei in der Kugelschale 60 gelagert ist. Der Lagerkörper kann sich jedoch in dieser Kugelschale 60 in radialer Richtung, d.h. also in Längsrichtung des Schlittens 40 oder quer zur Achse des Kolbens 16 verschieben, was in Fig. 2 angedeutet ist, denn zwischen den Oberflächen des Lagerkörpers 62 und der Aufnahme 61 ist ein Spalt S vorgesehen. Der Lagerkörper 62 ist also mit Spiel in radialer Richtung in dieser kugelschalenartigen Aufnahme 61 am Schlitten beweglich gelagert. Der Lagerkörper 62 hat eine Bohrung 70, die von der als Führungselement dienenden Stange 50 mit einem kreisrunden Querschnitt passend durchsetzt wird.

In den Fig. 2 und 3 sind nun übertrieben Montagefehler der im Gehäuse 13 fixierten Führungsstange 50 dargestellt. Aus Fig. 2 geht hervor, daß sich der Abstand D zwischen der Achsrichtung des Kolbens 16 und der Führungsstange 50 während einer Verstellbewegung des Kolbens 16 ändert. Dieser Lagefehler der Führungsstange 50 wird aber wegen des Radialspiels zwischen Lagerkörper 62 und der Aufnahme 61 der Kugelschale ausgeglichen, so daß ein Verklemmen nicht zu befürchten ist. Man erkennt dies daran, daß in der gestrichelt angedeuteten anderen Endposition des Schlittens 40 die Größe des Spaltes S reduziert ist.

In Fig. 3 ist angedeutet, daß die Führungsstange 50 windschief zur Achsrichtung des Kolbens 16 angeordnet ist. Auch dieser Lagefehler wird aufgrund der Gelenkverbindung zwischen Lagerkörper 62 und Aufnahme 61 am Schlitten ausgeglichen, denn der kugelkalottenartige Lagerkörper 62 kann sich leichtgängig um den Korrekturwinkel in der kugelschalenartigen Aufnahme 61 am Schlitten 40 verstellen. Bei einem solchen Lagefehler der Führungsstange 50 wird zwar der Hubkolben 16 um seine Längsachse gedreht, der Drehwinkel ist jedoch vergleichsweise klein und für die Praxis unbedeutend. Prinzipiell kann man die Kugelschale 60 in bekannter Weise geschlossen ausführen, also ähnlich dem Kugelschalensegment 38, wobei jedoch der Querschnitt wegen des notwendigen Radialspieles von der Kreisform abweicht. Aus Montagegründen ist es jedoch zweckmäßig, gewissermaßen nur einen Teilbereich einer solchen Kugelschale an den Schlitten 40 anzuspritzen, damit der Lagerkörper seitlich eingeführt werden kann. Deshalb hat bei dem in der Zeichnung dargestellten bevorzugten Ausführungsbeispiel diese Kugelschale 60 in radialer Richtung eine maulartige Öffnung 63, wie das Fig. 4 zeigt. Man kann diesen Sachverhalt auch so ausdrücken, daß die U-förmige Aussparung 44 durch Umspritzung eines elastischen Werkstoffes kugelschalenartig ausgekleidet ist.

In den Zeichnungen ist ein Ausführungsbeispiel dargestellt, bei dem die Verstellrichtung des Hubkolbens durch die Anordnung der beiden Lager 17 und 18 vorgegeben ist, denn diese beiden Lager sind unverstellbar am Gehäuse fixiert. Daher ist bei dieser Ausführung auch nur ein einarmiger Schlitten zum Verdrehschutz erforderlich. Der Grundgedanke der vorliegenden Erfindung kann aber auch bei solchen Anlagen realisiert werden, bei denen der Kolben direkt nut in einem vorzugsweise selbsteinstellenden Kalottenlager geführt ist und bei der der Schlitten zweiarmig ausgebildet und in beiden Endbereichen an Führungsstangen längsbeweglich geführt ist.

## Patentansprüche

1. Vorrichtung, insbesondere Hubwischeranlage für Kraftfahrzeuge, mit einem Kolben (16), der in einem Gehäuse verschiebbar geführt ist, und mit einem drehfest an diesem Kolben (16) fixierten Schlitten (40), der vom Kolben (16) radial absteht und an einem gehäusefesten Führungselement (50) längsgeführt ist, dadurch gekennzeichnet, daß das Führungselement (50) eine Bohrung (70) eines kugelkalottenartigen Lagerkörpers (62) passend durchsetzt und daß dieser Lagerkörper (62) mit Spiel in radialer Richtung in einer kugelschalartigen Aufnahme (61) am Schlitten (40) beweglich gelagert ist.

2. Vorrichtung nach Anspruch 1, dadurch gekennzeichnet, daß das Führungselement eine Stange (50) mit einem kreisrunden Querschnitt ist.

3. Vorrichtung nach Anspruch 1 oder 2, dadurch gekennzeichnet, daß die Kugelschale (60) am Schlitten (40) aus einem elatischen Werkstoff besteht und der Lagerkörper (62) in die Kugelschale (60) eingerastet ist.

4. Vorrichtung nach einem der vorhergehenden Ansprüche, dadurch gekennzeichnet, daß die kugelschalenartige Aufnahme (61) am Schlitten (40) in radialer Richtung eine maulartige Öffnung (63) zur seitlichen Einführung des Lagerkörpers (62) aufweist.

5. Vorrichtung nach Anspruch 3 oder 4, dadurch gekennzeichnet, daß der Schlitten (40) aus einem verdrehsicher, insbesondere auf den Kolben (16) aufgepreßten Metallteil (41) besteht, an das die Kugelschale (60) angespritzt ist.

6. Vorrichtung nach Anspruch 3 oder 4, dadurch gekennzeichnet, daß der Schlitten (40) einstückig mit der Kugelschale (60) aus Kunststoff direkt an den Kolben (16) angespritzt ist.

## Revendications

1. Dispositif, notamment installation d'essuie-glace déployable et rétractable pour véhicules automobiles comportant un piston (16), qui est guidé de manière à être déplaçable dans un carter et un coulisseau (40), qui est fixé solidairement en rotation à ce piston (16), fait saillie radialement hors du piston (16) et est guidé longitudinalement sur un élément de guidage (50) solidaire du carter, caractérisé en ce que l'élément de guidage (50) traverses, d'une manière ajustée, un perçage (70) d'un corps de palier (62) en forme de calotte shpérique, que ce corps de palier (62) est supporté, de manière à être déplaçable avec jeu dans la direction radiale, dans un logement en forme de coque sphérique (61) prévu sur le coulisseau (40).

2. Dispositif selon la revendication 1, caractérisé en ce que l'élément de guidage est est tige (50) de section transversale circulaire.

3. Dispositif selon la revendication 1 ou 2, caractérisé en ce que la coque sphérique (60) prévue sur le coulisseau (40) est réalisée en un matériau élastique et le corps de palier (62) est fixé par encliquetage dans la coque sphérique (60).

4. Dispositif selon l'une des revendications précédentes, caractérisé en ce que le logement en forme de coque sphérique (61) prévu sur le coulisseau (40) comporte, dans une direction radiale, une ouverture en forme de mâchoire (63) permettant l'insertion latérale du corps de palier (62).

5. Dispositif selon la revendication 3 ou 4, caractérisé en ce que le coulisseau (40) est constitué par une pièce métallique (41) bloquée en rotation, qui notamment est emmanchée à force sur le piston (16) et sur laquelle la coque sphérique (60) est formée par moulage par injection.

6. Dispositif selon la revendication 3 ou 4, caractérisé en ce que le coulisseau (40) est formé, d'un seul tenant avec la coque sphérique (60), par moulage par injection d'une matière plastique directement sur le piston (16).

**Claims**

1. A device, especially reciprocating wiper system for motor vehicles, comprising a piston (16) which is displaceably guided in a housing, and comprising a slide (40) fixed on said piston (16) in a manner protected against twisting, which slide projects radially from the piston (16) and is longitudinally guided on a guide element (50) fixed to the housing, characterized in that the guide element (50) extends fittingly through a bore (70) of a calotte-shaped bearing body (62) and that said bearing body (62) is movably mounted with play in the radial direction in a calotte-shaped receiver (61) on the slide (40).

2. A device according to claim 1, characterized in that the guide element is a rod (50) with a circular corss-section.

3. A device according to claim 1 or 2, characterized in that the ball cup (60) on the slide consists of an elastic material and that the bearing body (62) is locked into the ball cup (60).

4. A device according to one of the preceding claims, characterized that in the radial direction the calotte-shaped receiver (61) on the slide (40) has a mouth-shaped opening (63) for laterally entering the bearing body (62).

5. A device according to claim 3 or 4, characterized in that the slide (40) consists of a metal part (41) which is especially pressed upon the piston (16) in a manner protected against twisting and onto which the ball cup (60) is injection-moulded.

6. A device according to claim 3 or 4, characterized in that the slide (40) is integrally injection-moulded onto the piston (16) with the ball cup (60) from plastics material.

Fig. 1

EP 0 232 732 B1

Fig. 3

Fig. 4

Fig. 2